# EUROPEAN PATENT APPLICATION

(11) **EP 1 437 054 A1**
(43) Date of publication of application: **14.07.2004**
(21) Application number: 03075092.1
(22) Date of filing: 10.01.2003
(51) Int. Cl.: A23P 1/08, B05C 5/00

(54) **Method for applying a liquid mass on to a product and applicator**

(71) Applicant: Tromp Holding B.V., 4207 HE Gorinchem (NL)
(72) Inventor: Tromp, Peter Bastiaan, 4241 EB Arkel (NL)
(74) Representative: 't Jong, Bastiaan Jacob

(57) **Abstract**

The invention relates to a method for applying liquid mass to a product, in particular a dough product (4). The method comprises of providing a supply of substantially liquid mass (5), carrying a layer (6) of liquid mass out of the supply and applying the mass from the layer (6) onto supplied product (4), characterized by applying the layer (6) to the product by splashing the layer (6). The invention also relates to an application device for applying a substantially liquid mass (5) to a product (4).

## Description

The invention relates to a method for applying liquid mass to a product, in particular a dough product, comprising of providing a supply of substantially liquid mass, carrying a layer of liquid mass out of the supply and applying the mass from the layer onto supplied product.

In a known method a substantially liquid mass is applied in a thin layer to a rotating roller, wherein this layer is then scraped off the roller and guided onto the product via a scraper and a guide.

The drawback of the known method is that irregularities occur in the distribution close to the outer ends of the layer which is scraped and during application of the scraped mass onto the product. Particularly in the case of a dough product, the surface to which the mass is applied is uneven, whereby in the known techniques, wherein contact with the surface of the product is necessary, the desired uniform result is not achieved.

It is noted that the spraying of liquid mass onto a product using a nozzle is per se known. A layer of liquid mass is however not first used here, and numerous distributing/spreading difficulties occur due to air pressure differences as a result of spraying.

The invention has for its object to provide a method wherein a layer can be applied to a product in even manner. This object is achieved by splashing the layer during application of the layer to the product. The layer is herein spread through the air and then comes to lie on the product. There is therefore no contact between the application means and the surface of the product. By means of the splashing the layer of liquid mass is pulled apart and divided into small liquid quantities which are spread over the product.

Splashing of the layer preferably takes place by accelerated engagement of the layer. The layer guided out of the supply is hereby engaged and accelerated, whereby the layer loses its liquid character and is divided into smaller fractions, which are splashed. Splashes are formed which are spread over the product in uniform manner.

The splashing preferably comprises of setting the layer into rotation. Centrifugal forces are hereby generated in the layer which cause the layer to disintegrate into splashes. This is an effect similar to that of a centrifuge, wherein centrifugal forces cause the layer to be released from a roller in splashes. The direction of movement of the liquid layer herein also changes, whereby it is pulled further apart. Surprisingly, it has been found that, when the layer is set into rotation and then splashed, use is made of the different adhesion forces present in a layer.

It is favourable to form the layer by guiding the mass out of the supply through a gap. A layer is hereby obtained with a thickness the size of the gap. The thickness is uniform over a determined width, the gap width. The gap, and thereby also the layer, has/acquires a determined width. At least one part of the layer with this determined width is then splashed.

It is advantageous to form the layer by adhering liquid mass to a rotating surface which is in contact with the supply and guided therealong. A part of the liquid mass is hereby set into motion in the supply and guided out of the supply by making use of the physical forces in a liquid, such as cohesion, adhesion and Van der Waals forces, and/or other rheological properties whereby the liquid adheres to the surface. The degree of adhesion depends among other things on the co/adhesion of the liquid mass. This surface is preferably rotating, for instance formed by a mounted roller. The width thereof is preferably the same as the width of the gap.

The layer is preferably splashed substantially in a direction of movement of the product, in a particular embodiment in a direction opposed to the supply direction. The product, which preferably moves continuously, will hereby be provided in uniform manner with liquid mass. The layer has a width direction which is perpendicular to the supply direction of the product. In order to obtain a determined thickness of the splashed mass on the product, use is made of the relation between the supplied quantity of liquid mass in the layer and the supply speed of the product.

In a preferred embodiment, splashed mass which has not come to lie on the product is collected. The environment of the splashing device is hereby not contaminated.

In a further preferred embodiment the collected mass is fed back to the supply. No liquid mass is hereby lost and it is not wasted. The collected liquid mass can be pumped back or guided back via an engaging means.

The method preferably comprises of controlling the carrying-out speed and/or the size of the gap. The layer thickness of the layer on the product can hereby be controlled. A higher carrying-out speed results in more mass on the product and a larger gap has the same result.

The invention also relates to an application device for applying a substantially liquid mass to a product, in particular a dough product, comprising a frame provided with supply means and guide means for a product, a container for a substantially liquid mass, wherein the container comprises a discharge, and at least one splashing means for splashing the discharged mass which is arranged close to the guide means.

The invention is characterized by a splashing means comprising driven moving means which accelerate the drained mass. The liquid mass is hereby pulled apart and splashes are formed. Splashing takes place in that the splashing means loses contact with the splash, whereby the splash is released and seeks its way freely through the air toward the product.

The splashing means preferably comprises a splashing roller mounted on the frame. The rotating splashing roller will engage on the liquid mass and, owing to the rheological properties of the mass, the mass will accelerate. Further rotation of the roller brings about centrifugal forces which result in splashes shooting off the roller and coming to lie on supplied product.

It is favourable that a dispensing roller mounted on the frame comprises at least one side wall of the container. Rotation of the dispensing roller can hereby result in engagement on the liquid mass making use of the viscosity of the liquid mass, whereby the liquid mass is set into motion and guided toward the discharge. The side wall of the container is then not a fixed side wall.

The discharge is preferably formed by a gap. The liquid mass drained from the supply hereby forms a layer of a determined thickness corresponding with the gap size. The layer has a determined width corresponding with the width of the gap.

In a preferred embodiment the gap is defined between the dispensing roller and a partition. The liquid mass is hereby guided out of the supply, through the gap and along the dispensing roller, which carries the liquid mass with it making use of the physical properties, such as co/adhesion, of the liquid mass.

A guide means for the mass discharged from the discharge to the splashing means is preferably formed by at least the dispensing roller. The drained liquid mass is hereby guided at least partly from the discharge to the splashing means by the dispensing roller. The layer formed by the gap is preserved on the dispensing roller and this layer is displaced from the discharge to the splashing means, where the layer is splashed.

The partition is preferably arranged movably on the frame. The thickness of the layer and the size of the gap can hereby be varied.

It is advantageous to make the width of the splashing roller substantially equal to the width of the surface to which liquid mass is applied. The splashing roller can be exchanged. The mass in the form of a layer with a determined width which is supplied to the splashing roller is hereby splashed over a width corresponding with the width of the splashing roller, wherein this latter width is also the width of the surface for splashing, for instance the width of a determined dough product which can be supplied to the application device on supply means and guide means.

The frame is preferably provided with a collecting roller for at least partly collecting mass not splashed on the product. At least some of the splashes of liquid mass that are flying about are hereby collected.

The splash collecting roller is preferably at least a side wall of the container. Collected splashes can hereby be fed back into the container by rotating the splash collecting roller. The collected splashes are reused. No loss of liquid mass occurs.

In an embodiment according to the invention the frame is provided with a collecting tray for mass not splashed onto the product. The collecting tray is preferably arranged under the guide means for the product. Splashes which have not come to lie on the product are collected and can for instance be fed back to the supply of liquid mass.

The splashing roller is preferably provided with a profile. The structure of the mass to be applied to the product can hereby be varied. The profile can also be adjusted to the viscosity of the mass for splashing. The thicker the mass, the more profile, for instance serrations, the roller must have for a suitable manner of splashing. In addition, a pattern of splashing can be obtained by arranging irregular portions on the roller, wherein the mechanical character of the application device is lost. The dispensing roller and/or the splashing roller is provided with such a pattern. The irregular splashing appears to be the result of manual application of the liquid mass to the product.

The frame is preferably provided with controllable drive means for rotating at least one roller. The rotation speed of the roller can hereby be determined, whereby the quantity of liquid mass applied to the product can be controlled.

The frame is preferably provided with control means for regulating a difference in rotation speed between at least two rollers. The rotation speed of the splashing roller can hereby be considerably higher than the rotation speed of the dispensing roller. Depending on for instance the degree of viscosity of the liquid mass, this difference can be a factor of 20-150 or more. The rotation speed is continuously adjustable.

The invention will be further described with reference to the annexed figures, wherein:
- figure 1: shows a perspective view of a partly cut-away preferred embodiment of the device according to the invention,
- figure 2: shows a perspective view of a splashing roller according to another embodiment,
- figure 3: shows a dispensing roller according to a second embodiment, and
- figure 4: shows a perspective view of a splashing roller according to a third embodiment.

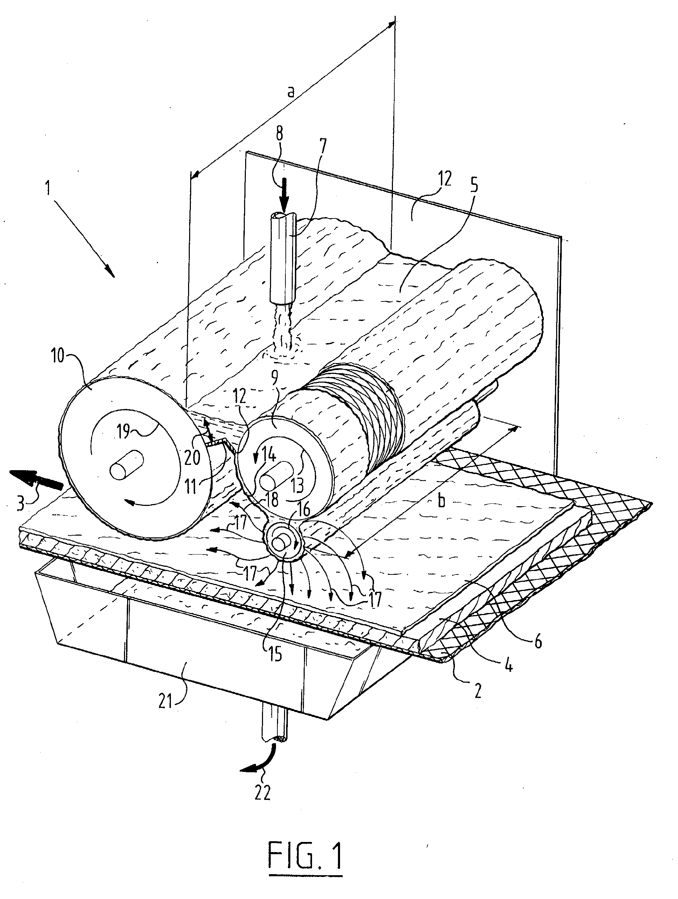

Figure 1 shows a view of a dispensing device 1 for applying a layer to a supplied product, for instance a dough product. Dough product 4 is arranged on a conveyor belt 2 which moves as according to arrow 3. This is a dough product which is used as pizza base. Figure 1 shows a continuous dough product 4, but a discontinuous dough product can also be placed on conveyor belt 2. In the latter case, these will for instance be already preformed, circular pizza bases.

Conveyor belt 2 forms a component of a production line for dough products 4. Dough products 4 are transported between processing units for the dough products on the conveyor belt, for instance a grille track or other suitable carrier for dough products. Dispensing device 1 according to the invention is incorporated in the production line for applying a layer, in the shown embodiment the first layer, to dough product 4. The product 5 for application is applied to dough product 4 in a layer 6 by the device. This may for instance be ketchup, sauce or fats, which are arranged on dough products in a thin layer. Because the dough product is not flat, it is not possible to use an application device for layer 6 which has contact with the top layer of dough product 4. The invention therefore provides a splashing device.

The liquid mass 5 is arranged in dispensing device 1 via a supply 7 as according to arrow 8. Dispensing device 1 can be filled with liquid mass 5, wherein a supply of the liquid mass 5 is held between two rollers 9 and 10, a partition 11 and two side walls, of which only side wall 12 is shown. The second side wall is concealed because the rollers 9, 10 arranged mounted in the side wall are shown. Side walls 12 fit closely against the rollers, so that the liquid mass cannot flow away therealong. The same applies to the partition 11, which fits precisely onto roller 10. Additional means can be arranged for this purpose which provide a close-fitting connection and which are per se known to the skilled person.

The space in which liquid mass 5 is held is open on the underside along the width of roller 9 due to a gap 12 formed between partition 11 and roller 9. Gap 12 extends along the full width A present between side walls 12 and rollers 9, 10.

The rotation of roller 9 as according to arrow 13 by means of a controllable drive (not shown) has the result that a layer 14 of liquid mass 5 is carried along on the outside of dispensing roller 9 as according to arrow 13 by means of physical forces, in particular the co/adhesion.

The size of the gap 12 here influences the thickness of layer 14. Dispensing roller 9 is manufactured from a suitable material, for instance of plastic. The rotational speed of dispensing roller 9 is set such that layer 14 is not detached from dispensing roller 9 by centrifugal forces and/or the force of gravity.

Layer 14 is moved in the direction of splashing roller 15 as according to arrow 13. Splashing roller 15 is bearing mounted on the frame (not shown) and is driven to rotate as according to arrow 16. The rotational speed is preferably considerably higher than the rotation speed of dispensing roller 9. The difference is preferably at least a factor of 10, in particular at least a factor of 50, and in particular at least a factor of 100 in the preferred embodiment. The difference in speed can be adjusted by a skilled person, wherein the skilled person takes into account, among other things, the viscosity of the liquid. The thinner the liquid mass 5, the lower the differential factor.

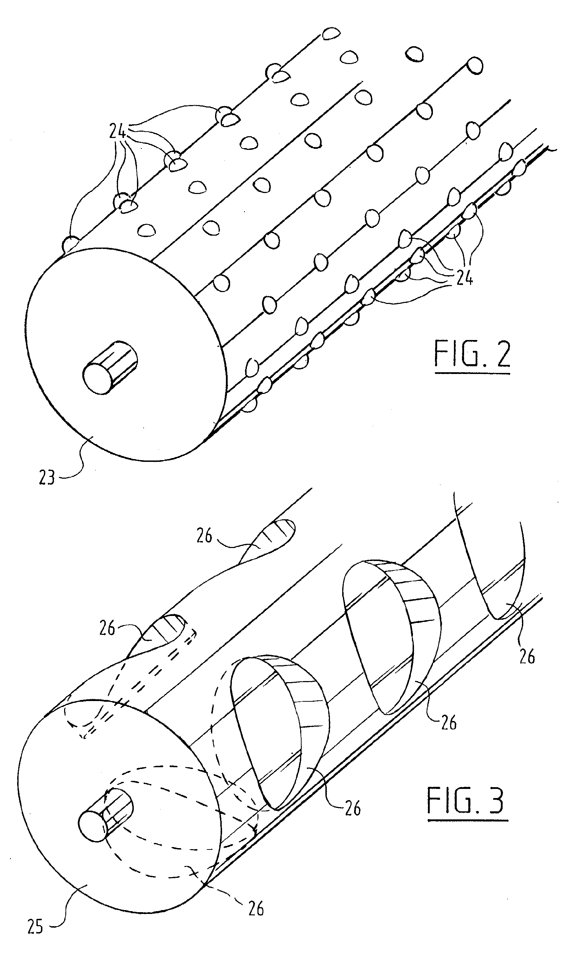

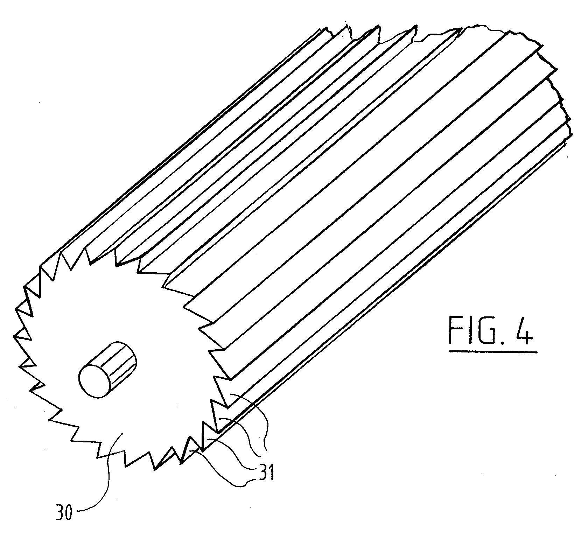

The splashing roller 15 according to figure 1 is smooth. Diverse embodiments are however possible. A serrated splashing roller 30 can also be applied, see figure 4, but also a splashing roller 23 according to figure 2, which is provided with unevenly distributed protrusions over the length of the roller. The profile will influence the splashing of the liquid mass 5 onto dough product 4. The choice of profile can also depend on the liquid mass used, in particular on the viscosity of the mass. A thick mass requires a more profiled splashing roller 15. The profile also influences the pattern of splashing, and thus the pattern in which the liquid mass finally comes to lie on the dough product.

Owing to an irregular pattern on splashing roller 23 the liquid mass will be splashed in uneven manner. This will give the impression that the mass has been applied to the dough product by hand.

Splashing roller 15 extends over a width B which is equal to or smaller than width A of the liquid mass layer 14 on roller 9. The width B for instance corresponds at least with the width of the dough product 4 for splashing that is being carried past.

The width B is used to adjust the width of the dough product for splashing. Adjusting the width in this manner produces a considerable improvement compared to the prior art, since far fewer dispensing problems occur, particularly at the outer ends of the roller 15, than in the prior art devices. The method according to the invention also ensures a uniform application of the layer by splashing close to these outer ends.

The higher rotation speed 16 of splashing roller 15 results in the largest part of the liquid mass 14 being splashed off the outside of dispensing roller 9 as according to arrows 17. Due to the rotation use is made of centrifugal forces in the mass, which results in the formation of small fractions. Layer 14 is, in a manner of speaking, taken over by splashing roller 15 and splashed over dough product 4 due to the high rotation speed. The take-over takes place due to the higher engaging speed of splashing roller 15.

At a constant supply speed 3 of dough product 4 a very uniformly distributed layer 6 of the liquid mass will be obtained when a smooth or uniformly profiled splashing roller 15 is used for this purpose. Conversely, use of the splashing roller according to figure 2 results in a layer 6 with a less mechanical look being applied to the dough products. A great advantage according to the invention is however that proper splashing will take place particularly in the edge regions of dough product 4, without much loss of the liquid mass occurring therein.

The movement of the liquid mass as according to arrows 17 is brought about by the centrifugal force produced by splashing roller 15 and the force of gravity. The viscosity and co/adhesion of the mass is also important for the forming of the splashes. When the liquid mass is a mixture, for instance ketchup, use can be made of the different cohesion/adhesion forces in the mixture.

Some of the non-splashed liquid mass 14 will return via dispensing roller 9 to the liquid mass held between rollers 9 and 10. This is in any case so for the liquid mass 5 situated in the region on which the splashing roller 15 does not engage, as a result of smaller width B of the splashing roller relative to the width A of the dispensing roller. This is therefore close to at least one of the outer ends of roller 9.

According to the invention it is very easy to replace the splashing roller 15 with a roller of a different width B, subject to the supplied dough products 4.

The liquid mass being splashed as according to arrow 18 will be collected in its flight by collecting roller 10, which is arranged rotatably in the frame and is driven as according to arrow 19. The roller 10, which according to the embodiment of figure 1 is smooth, thus collects the residual liquid mass and, similarly to the operation of dispensing roller 9, returns it to the liquid mass between the two rollers 9, 10. Collecting roller 10 is thus intended mainly for preventing and collecting splashes which do not fall onto dough products 4.

Collecting roller 10 is situated above the dough product and layer 6, as is splashing roller 15. None of the rollers therefore makes contact with the dough product and/or the layer 6 applied to the dough product. Nor is it favourable according to the invention since dough product 4 does not have a uniform thickness, but according to the invention a uniform thick layer 6 is however applied to the dough product.

The fitting of partition 10 onto roller 10 can be designed in different ways. Partition 11 scrapes over roller 10 and preferably connects closely thereto so that the roller is provided with hardly any liquid mass when roller 10 comes into contact with splashes as according to arrow 18.

Partition 11 can move as according to arrow 20 while connecting closely onto roller 10. The width of gap 12 can hereby be adjusted. The quantity of liquid mass 5 in layer 14 to be splashed can hereby be modified. Depending on the viscosity and the cohesion of the liquid mass, there are however limits to the thickness of layer 14, and thus to the width of gap 12.

The quantity of liquid for splashing can be further increased by increasing the rotation speed 13.

In order to collect splashes which do not fall on dough product 4, a collecting tray 21 is arranged under the dough product which forms part of the unit dispensing device 1. The liquid mass is collected herein and drained as according to arrow 22. It is possible to feed this drained liquid mass back via arrow 8 to the liquid mass between the two rollers 9, 10. In this manner no liquid mass is lost during the splashing.

According to another embodiment, the dispensing roller 9 can be replaced with a roller with a profile as shown in figure 3. The shown dispensing roller 25, which can replace the roller 9 of figure 1, is provided with a profile with recesses 26. The layer 14 can only be formed at the location of recesses 26 when roller 25 is rotated as according to arrow 13 in figure 1. Dispensing roller 25 fits closely against partition 11, whereby there occurs no gap 12. Only at the locations of recesses 26 is there space for carrying along a layer of liquid mass 5. There will be no, or hardly any, liquid mass present at positions other than the recesses.

The splashing roller can now only splash the liquid mass situated in recesses 26. It is hereby possible to operate with determined splashing patterns which for instance correspond better with the discontinuous dough product 4 being carried past. With correct control by the skilled person, it is possible to splash in a pattern which is closely related to the circular form of pizza bases.

Not shown in the figures are the actuating means, control means and drive means for the respective moving parts. The arrangement hereof is self-evident to the skilled person.

## Claims

1. Method for applying liquid mass to a product, in particular a dough product, comprising of providing a supply of substantially liquid mass, carrying a layer of liquid mass out of the supply and applying the mass from the layer onto supplied product, **characterized by** applying the layer to the product by splashing the layer.

2. Method as claimed in claim 1, **characterized by** splashing of the layer by accelerated engagement of the layer and by changing the direction of movement of the layer.

3. Method as claimed in claim 1 or 2, **characterized by** splashing by setting the layer into rotation.

4. Method as claimed in any of the foregoing claims, **characterized by** forming the layer by guiding the mass out of the supply through a gap.

5. Method as claimed in any of the foregoing claims, **characterized by** forming the layer by adhering liquid mass to a rotating surface which is in contact with the supply and guided therealong.

6. Method as claimed in any of the foregoing claims, **characterized by** splashing the layer substantially in a direction opposed to the supply direction of the product.

7. Method as claimed in any of the foregoing claims, **characterized by** collecting mass which has not been splashed onto the product.

8. Method as claimed in claim 7, **characterized by** feeding collected mass back to the supply.

9. Method as claimed in any of the foregoing claims, **characterized by** controlling the carrying-out speed and/or the size of the gap.

10. Application device for applying a substantially liquid mass to a product, in particular a dough product, comprising a frame provided with supply means and guide means for a product, a container for a substantially liquid mass, wherein the container comprises a discharge, and at least one splashing means for splashing the discharged mass which is arranged close to the guide means, **characterized in that** the splashing means comprises driven moving means which accelerate the drained mass.

11. Application device as claimed in claim 10, **characterized in that** the splashing means comprise a splashing roller mounted on the frame.

12. Application device as claimed in claim 10 or 11, **characterized in that** at least one side wall of the container comprises a dispensing roller mounted on the frame.

13. Application device as claimed in claim 12, **characterized in that** a guide means for mass discharged from the discharge to the splashing means is at least formed by the dispensing roller.

14. Application device as claimed in either of the claims 12 or 13, **characterized in that** a guide means for mass discharged from the discharge to the splashing means is at least formed by the dispensing roller.

15. Application device as claimed in any of the claims 10-14, **characterized in that** the discharge is formed by a gap.

16. Application device as claimed in claim 15, **characterized in that** the gap is defined between the dispensing roller and a partition.

17. Application device as claimed in claim 16, **characterized in that** the partition is arranged movably on the frame.

18. Application device as claimed in any of the claims 11-17, **characterized in that** the width of the splashing roller is substantially equal to the width of the surface to which liquid mass is applied.

19. Application device as claimed in any of the claims 10-18, **characterized in that** the frame is provided with a third roller, which is a splash collecting roller, for at least partly collecting mass not splashed on the product.

20. Application device as claimed in claim 19, **characterized in that** the splash collecting roller is at least a side wall of the container.

21. Application device as claimed in any of the claims 10-20, **characterized in that** the frame is provided with a collecting tray for mass not splashed onto the product.

22. Application device as claimed in any of the claims 11-21, **characterized in that** the splashing roller is provided with a profile.

23. Application device as claimed in any of the claims 11-22, **characterized in that** the frame is provided with controllable drive means for rotating at least one roller.

24. Application device as claimed in any of the claims 12-23, **characterized in that** the frame is provided with control means for regulating a difference in rotation speed between at least two rollers.
